# EUROPEAN PATENT SPECIFICATION

(11) **EP 3 214 401 B1**
(45) Date of publication and mention of the grant of the patent: **26.02.2020**
(21) Application number: 17158781.9
(22) Date of filing: 01.03.2017
(51) Int. Cl.: F41H 7/00, B63G 8/32, B60G 17/00, B60G 17/02, B60G 17/08, B60G 99/00, F16F 15/067, F16F 1/04

(54) **VEHICLE FOR SUPPORTING, TRANSPORTING AND CONTROLLING A BALLISTIC LOAD**
FAHRZEUG ZUM STÜTZEN, TRANSPORTIEREN UND ANSTEUERN EINER BALLISTISCHEN LAST
VÉHICULE POUR SUPPORTER, TRANSPORTER ET COMMANDER UNE CHARGE BALISTIQUE

(30) Priority: 01.03.2016 IT UB20161198
(43) Date of publication of application: 06.09.2017
(73) Proprietor: COMETTO S.p.A., 12011 Borgo San Dalmazzo (IT)
(72) Inventor: TERZUOLO, Pierluigi, 12100 Cuneo (IT); LIPPI, Fabrizio, 12010 Vignolo (IT)
(74) Representative: Bertolotto, Simone

(56) References cited:
- EP-A1- 2 258 570
- EP-A1- 2 778 598
- WO-A2-2012/125903
- US-A- 5 564 649
- US-A1- 2012 037 059
- US-A1- 2014 060 296

## Description

The present invention relates to a vehicle for supporting a ballistic load, in particular to a tyred vehicle for transporting weaponry, provided with an onboard electronic control unit for the ballistic load.

In the field of tyred vehicle transportation, it is known to use tractor-drawn trailers comprising a frame defining a loading platform and a plurality of wheels, each of which is connected to the frame by an associated suspension comprising a hydraulic cylinder.

Such vehicles can be used for transporting various types of special loads, typically heavy loads, on roads, in warehouses and on oil platforms.

Vehicles of this type are known in the state of the art and are produced, for example, by the applicant. By way of example, thanks to its small-diameter rubber 'cushion' wheels, the EMT (Electric Modular Transporter) transport module developed by the applicant is employed for both use inside and use outside the plant. The EMT's applications range from production lines to the storage of finished components. EMT transport modules can be equipped with two or three axle lines and longitudinally or laterally coupled with overall loads of up to 200 t. The EMT is a load-and-carry vehicle and ensures a reduced load height, thanks to the 420-mm travel of the suspension and a balanced load distribution system. Multidirectional steering and multifunction radio control enable excellent manoeuvrability.

Power units and electric wheel motors ensure zero pollutant emissions and total noise-free operation. The position of each wheel axle is electronically controlled by an encoder. The self-propelled EMT can also quickly change direction from forwards to sideways movement and from diagonal movement to 360 on-the-spot rotation, clockwise and anticlockwise.

This vehicle can be used in conditions that require maximum safety, such as areas where explosive gases are present for example, and therefore finds wide application. It can also be used in marine areas, underwater.

For the above-mentioned reasons, the applicant has verified that a vehicle of the previously described type (or with similar characteristics) can find application in the transport of heavy weaponry, such as torpedoes for example, and heavy wire-guided torpedoes in particular. Currently, such torpedoes are exclusively transported by submarines or warships (i.e. by sea) . However, it is obvious that the possibility of land transport for these arms offers particular advantages, such as greater speed in deployment of the ballistic load and in its transportation from a storage area to an area of possible use.

However, the vehicles on the market today do not allow performing the aforementioned function in safety, nor are they able to control or command specific functions of the transported ballistic load. In particular, these vehicles of known type could act as means of transport for ballistic loads only on perfectly flat routes and, in any case, would not be effective for maintaining the ballistic load in its position of use, as they would not be able control operation of the ballistic load if its use became necessary. In fact, because the suspensions of these vehicles are rigid or semi-rigid, they do not permit keeping the ballistic load in a safe position during transport, for example, in the presence of humps or depressions in the ground, or in the case where the transport vehicle together with the transported load are loaded on a ship that is small and therefore particularly subject to the roughness of the sea.

Patent EP2258570 describes a method for controlling the supply of a pressurized operating fluid to a hydraulic cylinder of a suspension of a vehicle of the previously described type. Nevertheless, even though it reduces the effects of the roughness of the terrain, a system that implements this control method is not designed for transporting weaponry, in particular heavy torpedoes, and therefore does not guarantee complete reliability and safety. Moreover, it is not configured to control the ballistic load.

Patent document WO2012/125903 relates generally to robotic systems and devices, and more particularly to mobile robotic vehicles. Furthermore, patent document US2012/037059 relates to a method for steering a torpedo to at least one target, and to a torpedo which can be controlled remotely. However, the above-identified issues remain unsolved.

The object of the present invention is therefore that of providing a vehicle for the support, transport and control of a special load, in particular a heavy ballistic load, which overcomes the limits of the known art.

According to the present invention, a vehicle is thus provided for a special load, in particular a heavy ballistic load, as defined in the appended claims.

The invention shall now be described with reference to the accompanying drawings, which illustrate a non-limitative embodiment, in which:
- Figure 1 schematically shows, with parts removed for clarity, a vehicle according to the known art;
- Figure 2 shows a side view, on a highly enlarged scale, of a detail in Figure 1;
- Figure 3 shows a side view of a vehicle according to one aspect of the present invention;
- Figure 4 shows a top view of an elastic damping assembly of the vehicle in Figure 3 configured for carrying a ballistic load, according to one aspect of the present invention;
- Figure 5 shows in greater detail an enlarged side view of a portion of the elastic damping assembly in Figure 4 mounted on the vehicle in Figure 3;
- Figure 6 shows, using a block diagram, a command and control system for a ballistic load carried by the vehicle in Figure 3 or 5, according to one embodiment of the present invention; and
- Figure 7 shows the vehicle in Figure 3 or 5 in two operating conditions.

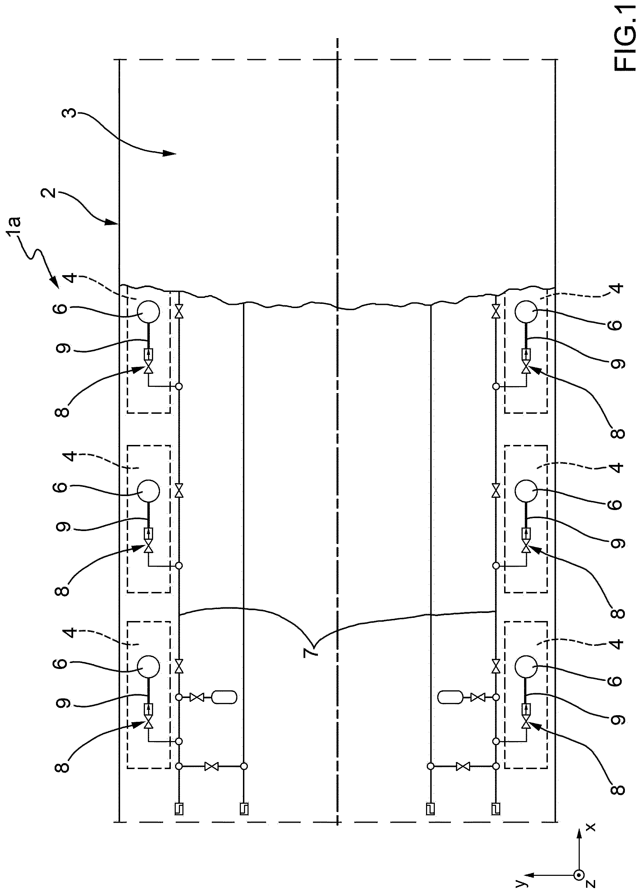

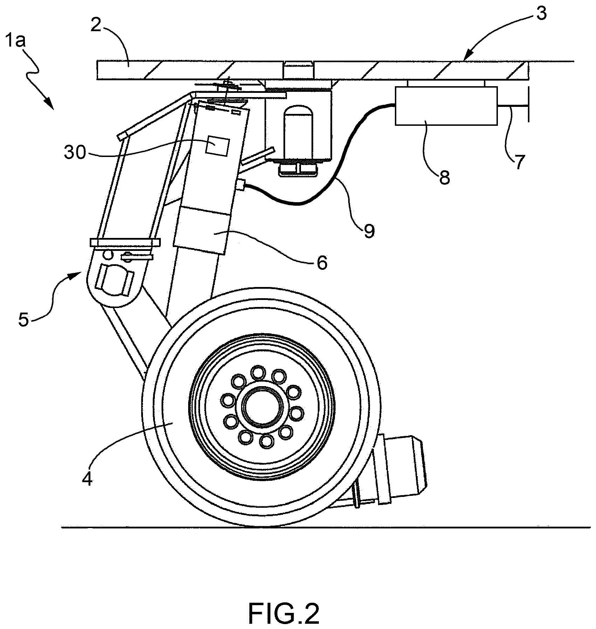

Figure 1 shows, in a top view on an ideal XY plane, a portion of a vehicle 1, including an undercarriage 1a, comprising a frame 2 defining a loading platform 3 and a plurality of wheels 4, each of which is coupled to the frame 2 by an associated hydraulic suspension 5 (better shown in Figure 2).

The hydraulic suspension 5 comprises a hydraulic cylinder 6, which is coupled to a feed pipe 7 of a pressurized fluid via the interposition of a cut off valve assembly 8 (known as a "parachute valve", which, in the event of breakage in any part of the pipework, prevents fluid leakage, avoiding loss of operation of the transmissions) and a flexible hose 9 connecting the valve assembly 8 to the hydraulic cylinder 6.

According to an aspect of the present invention, the vehicle 1 is an electric tyred vehicle, and is equipped with hydraulic suspension 5, for example as described in EP2258570.

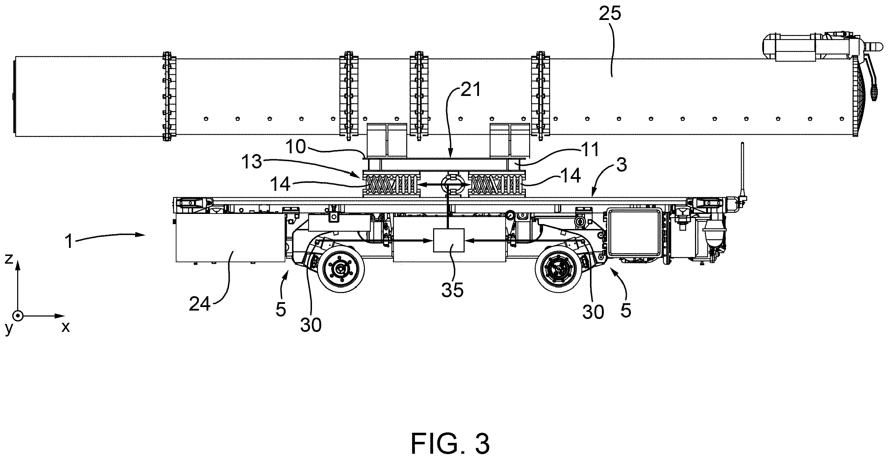

Figure 3 shows, according to an aspect of the present invention, a side view of the vehicle 1, equipped with an elastic damping assembly 13 coupled to the loading platform 3. The elastic damping assembly 13 acts as an interface between the loading platform 3 and a plate 10 of a support frame 11 of a ballistic load 25. The ballistic load 25 is, in particular, a torpedo launch assembly. A single torpedo tube is shown in Figure 3 as the ballistic load 25, in particular for a heavy wire-guided torpedo for underwater attacks, housed inside the torpedo tube. In rest conditions (i.e. with the vehicle stationary on a perfectly flat surface), the loading platform 3 and the plate 10 lie parallel to the same ideal XY plane.

The elastic damping assembly 13 is arranged between the loading platform 3 of the vehicle 1 and a plate 10 of the support frame 11 of the launch assembly 25 arranged facing a conveniently but not necessarily median portion 12 of the loading platform 3.

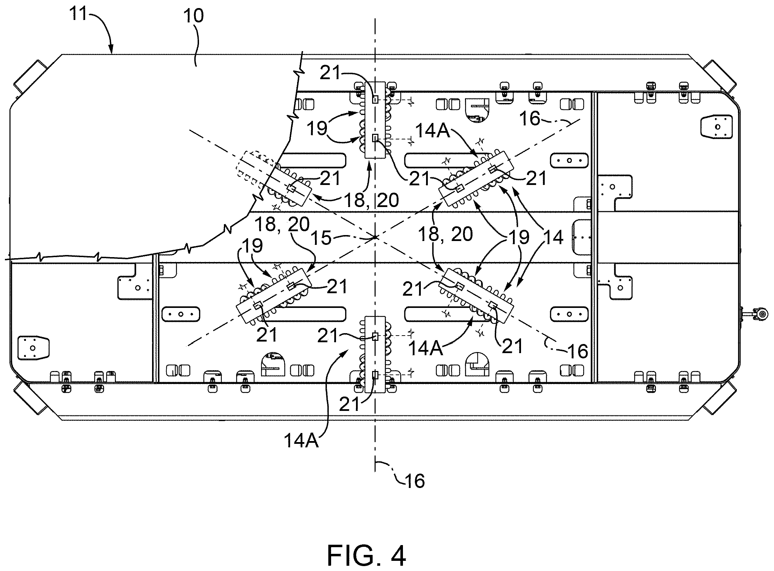

Referring to Figure 4, the elastic damping assembly 13 comprises a ring of damping devices 14 extending radially around an axis 15 orthogonal to the loading platform 3 and passing through portion 12.

In the particular example described, the elastic damping assembly 13 comprises three pairs 14A of damping devices 14. The damping devices 14 of each pair are aligned with each other along an associated direction 16 parallel to the loading platform 3, intersecting axis 15 and passing through a pair of associated vertices of a hexagon.

The damping devices 14 of each pair extend outside the above-mentioned hexagon, or in any case, close to the associated vertices, and each comprise an associated pair of coil springs 19 aligned with each other in direction 16. The springs 19 of each damping device 14 conveniently have opposite coiling, one right-handed and one left-handed, with their adjacent ends firmly fixed to one another, so as to be arranged in series with one another.

Each damping device 14 also comprises two jaw assemblies 18 and 20, which act on respective diametrically opposed portions of the springs 19 along axis 15 and are adapted to couple the springs 19 to the loading platform 3 and to the plate 10, respectively.

Each jaw assembly 18 is a static assembly and comprises two jaws 18A and one or more screws to clamp the jaws 18A and intermediate portions of the coils of the associated springs 19 to each other.

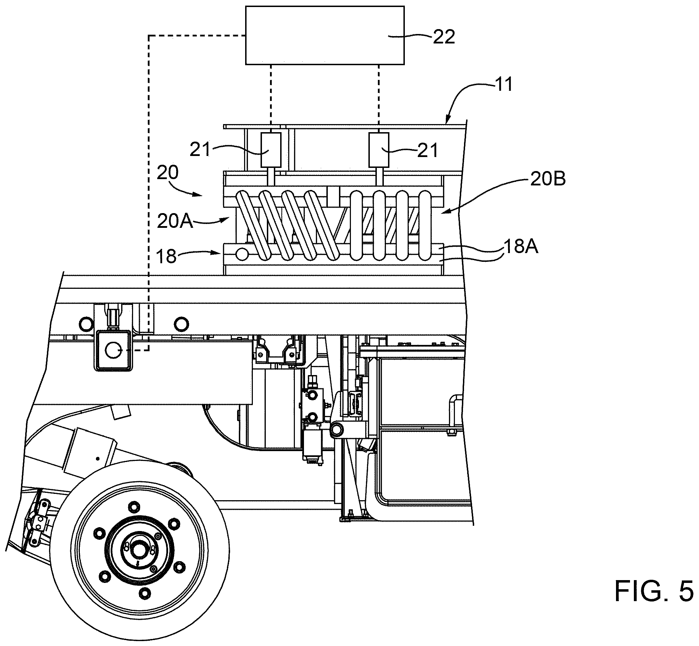

Instead, jaw assembly 20 is a dynamic assembly and comprises two mutually independent motorized grippers 20A and 20B having respective jaws that accept the coils of one of the two respective springs 19 between them. The jaws of the grippers 20A and 20B are operated by respective actuators 21 (Figure 5), conveniently, but not necessarily, hydraulic ones and mutually independent. The actuators 21 are adapted to move the associated jaws with respect to one another between an open position, in which the associated spring 19 is left free, and a closed position, in which they block the coils of the spring 19.

The actuators 21 are controlled by a unit 22 in response to a pressure signal of the hydraulic suspension 5, i.e. based on the load acting on the undercarriages 1a, to continuously or discretely adjust the damping of the associated damping device 14 and, specifically, only the torsional stiffness or the torsional stiffness and bearing strength under load, i.e. in a direction parallel to axis 15.

According to a variant that is not shown, one or more of the jaw assemblies 20 comprises only one motorized gripper 20A or 20B, while the other gripper is replaced by a static gripper, for example, the same as jaw assembly 18.

According to another variant that is not shown, part or all of the static jaw assemblies 18 are replaced by adjustable grippers, for example, similar to grippers 20A or 20B.

The vehicle 1 includes the mechanical and electronic control characteristics of an EMT (Electric Modular Transporter) vehicle, or transport module, produced and marketed by the applicant, of known type and already described with reference to the aforementioned state of the art. Moreover, there are documents that at least partially describe a module of this type, for example, EP2258570 and EP2325030.

The vehicle 1 is electrically powered and includes a lithiumion (LiFePO₄) battery pack 24 for this purpose, which guarantees an optimal power/weight ratio, no memory effects and slow discharge when not in use. The batteries have an autonomy in continual use of more than 10 km and are housed in a rollout unit that enables easy replacement. The batteries are also housed in a waterproof and explosion-proof container. In consequence, any failure thereof will not compromise the security of the transported load.

One or more pressure sensors 30 of a commercially available type, for example made using MEMS technology or another technology, are operatively coupled to each hydraulic suspension 5, for example arranged inside each hydraulic cylinder 6. In use, the pressure sensors detect the pressure to which hydraulic suspension 5 is subjected. This pressure varies, for example, due to humps or depressions, or unevenness in the ground in general, or due to (up/down) ramps or stress loads during transport via naval vessels.

The vehicle 1 also comprises an electronic command and control unit 35, integrated in, or coupled to, the vehicle 1. The electronic command and control unit 35 is housed in a waterproof container.

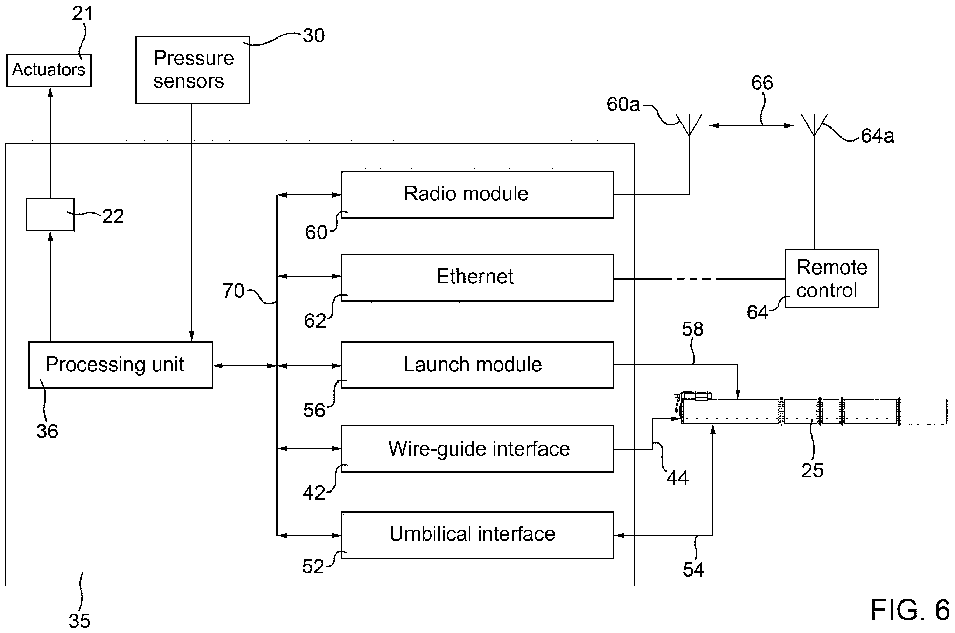

The electronic command and control unit 35, shown in Figure 6 by means of a functional block diagram, includes a processing unit 36, for example, comprising a PLC with CPU or a different microprocessor processing system. The processing unit 36 communicates, in a manner that is in itself known, with each pressure sensor 30 to receive information from each of them regarding the pressure to which each hydraulic suspension 5 is subjected in every moment of operation. The data flow from the pressure sensors 30 to the processing unit 36 can be continuous or constituted by information packets sent at predetermined times or with a clock frequency defined in the design phase. For example, the pressure sensors 30 might send the detected pressure data to the processing unit 36 every 100 ms. It is obvious that this value is given purely by way of example and can be chosen according to needs.

After having received and interpreted the data from the pressure sensors 30, the processing unit 36 selectively controls, via unit 22, the actuators 21 of the respective damping devices 14 of the elastic damping assembly 13 based on the data received from the pressure sensors 30. These operations are performed in order to maintain the load 25 carried by the platform plate 10 in secure conditions. In other words, the damping devices 14 are controlled to balance and counteract the stress born at the level of the hydraulic suspension 5. For example, if due to ground irregularities, the vehicle 1 leans to the right, the hydraulic suspensions 5 on the right will be subjected to a corresponding stress; in consequence, the pressure sensors 30 coupled to these right hand hydraulic suspensions 5 will detect the amount of stress and, at the same time, the pressure sensors 30 coupled to the hydraulic suspensions 5 on the opposite side (left-hand side) will also detect a drop in the pressure to which they are subjected. As mentioned, information regarding the change in pressure detected by all of the pressure sensors 30 is sent to the processing unit 36. The processing unit 36 controls the damping devices 14 so as to compensate the unbalancing of the vehicle 1, stiffening/softening the damping devices 14 to reduce the amount of stress transmitted to the plate 10 and, in consequence, to the transported ballistic load 25.

The electronic command and control unit 35 is also configured to integrate command and control functions for the load 25 (in this case, as stated, a torpedo tube for a heavy torpedo). Heavy torpedoes that can be used with a torpedo tube 25 of the type shown in Figure 3 are described, for example, in patent documents US3831879 and EP1895263. Furthermore, the same torpedo tube can also be used for light torpedoes, by inserting appropriate adapters to compensate for the different diameters.

Known types of torpedoes comprise a main body movable in the sea to reach a target and a guide wire for continuous information exchange between the base unit and the torpedo (according to the known art, the base unit is a submarine or warship).

According to one aspect of the present invention, the base unit, which carries the torpedo tube 25 and to which the guide wire is coupled, is the vehicle 1. To this end, the electronic command and control unit 35 includes a guide wire module 42 coupled to the guide wire 44, e.g. an optical fibre cable, and designed to ensure continuous information exchange with the torpedo tube 25 and, via the latter, with the torpedo.

The main body of the torpedo comprises a plurality of stages designed to house respective equipment of the torpedo, such as, for example, a propulsion system, an acoustic detection unit and an explosive warhead. The main body of the torpedo also comprises a control and guidance stage, to which a first end of the guide wire 44 is fixed. More specifically, the first end of the guide wire 44 is wound to form a first hollow coil. In greater detail, the control and guidance stage of the torpedo comprises a casing housing the first propulsion motor coil. In particular, the first coil is held in a predetermined position inside the casing by a support structure integral with the first coil.

An opposite end of the guide wire 44 is wound to form a second hollow coil, which is operatively coupled to a support region belonging to the vehicle 1 and the guide wire module 42.

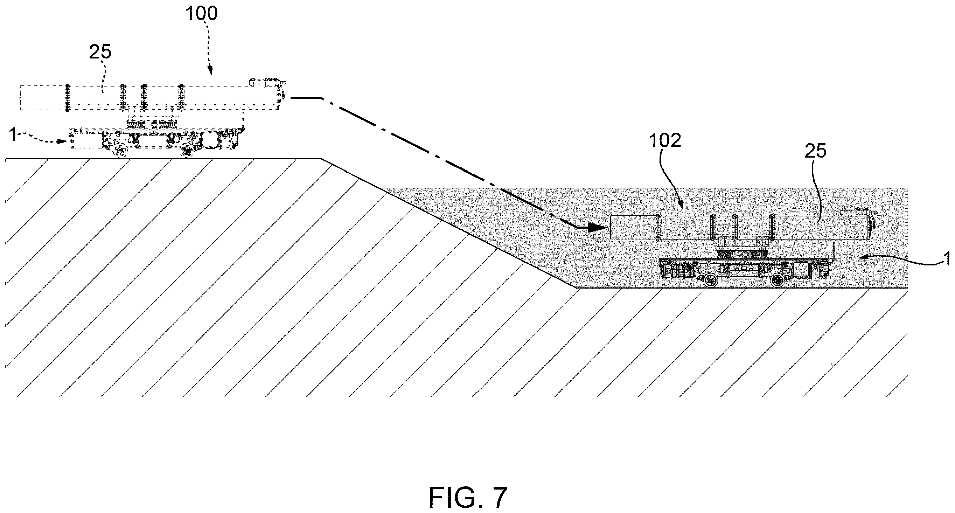

Preparatory to launching, the vehicle 1 is arranged in a configuration suitable for being launched, i.e. underwater, for example, by travelling down a ramp provided for this purpose. To this end, please refer to Figure 7 which shows a first operating condition, indicated by reference numeral 100, in which the vehicle 1 is out of the water, and a second operating condition, indicated by reference numeral 102, in which the vehicle 1 has moved below sea level (underwater condition) and is ready to control the launching of the torpedo. In operating condition 102, the torpedo is flooded (and, if necessary, pressurized to balance the pressure in the torpedo tube 25 with pressure in an area of sea surrounding the torpedo exit point). During the step of flooding the torpedo, water fills the wire feed duct.

The aft portion is then released from support of the torpedo tube 25 to allow the torpedo to leave the torpedo tube 25.

The motion of the torpedo away from the vehicle 1 unwinds the first coil and the second coil, respectively, while the portion of wire 44 stretched between the first and the second coil remains substantially stationary with respect to the sea.

The torpedo is wire-guided by the guide wire 44, in optical fibre, through which the torpedo remains in communication with the launch craft (the vehicle 1) to transmit and receive the necessary data for the success of the mission, for example, information on the coordinates at which the target is localized, possible target reassignment, type of attack, route, depth, speed, etc.).

If the target were at a distance greater than the maximum length of the unwound guide wire 44, a decoupling element might be provided between the portion of wire of the first coil and the portion of wire of the second coil, thanks to which the torpedo loses all mechanical and communication connections with the vehicle 1. The torpedo proceeds towards the target using information obtained via sonar, in a manner that is in itself known (homing guidance in the final phase of the mission).

The electronic command and control unit 35 also comprises an umbilical cable interface module 52. The umbilical cable interface module 52 is operatively coupled to the torpedo by an "umbilical" cable 54. Prior to, and during, the preparatory phases for launching the torpedo, the umbilical cable 54 has a first end operatively coupled to a data transceiver module of the torpedo/torpedo tube 25 and a second end operatively coupled to the umbilical cable interface module 52. The umbilical cable 54 is configured to transport system diagnostic information regarding the torpedo. For example, the umbilical cable 54 is a data communication cable of known type and provides information to the umbilical cable interface module 52 related to vibrations to which the torpedo is subjected, to the salinity of the water when the vehicle 1 and the torpedo are submerged, and still more information. It is obvious that, to this end, opportune sensors are arranged on the torpedo, and/or on the torpedo tube 25, and/or integrated within them, in order to acquire the information to transmit, via the umbilical cable 54, to the umbilical cable interface module 52.

The information received by the umbilical cable interface module 52 is transmitted by the latter to the processing unit 36. There are various ways in which this information is used by the processing unit 36. For example, in the case where excessive vibrations are detected on the torpedo (above a certain predetermined threshold), the processing unit 36 can decide to reduce the manoeuvring speed of the vehicle 1, or halt it, if on land; if the vehicle 1 is submerged, the processing unit 36 can control the traction system of the vehicle 1 to bring the vehicle 1 back out of the water; if the salinity of the water is too high (e.g. salinity above a certain predetermined threshold), such as to damage the torpedo and/or the vehicle 1 and/or parts thereof, the processing unit 36 can control the traction system to bring the vehicle 1 back out of the water. In general, the processing unit 36 can control the traction system of the vehicle 1 to manoeuvre it if the monitored parameters are not within a predetermined safety range.

The cutting of the umbilical cable 54 corresponds to starting the propulsion motor of the torpedo and therefore the launching of the torpedo. The cutting of the umbilical cable 54 takes place using a cutting device opportunely prepared for this purpose (for example, a cutting blade), which cuts the umbilical cable to prevent it being "torn-off" and damaging the electronic command and control unit 35. It is possible to start torpedo launch operations by inclining the torpedo tube 25 towards the seabed and make the torpedo "slide" out from the torpedo tube 25. By configuring the umbilical cable 54 with an opportune length, detachment can be achieved even without a cutting device, but by the simple effect of breaking under the traction caused by the sliding of the torpedo. It is obvious that, in this last case, the umbilical cable 54 is coupled to the torpedo and/or to the umbilical cable interface module 52 via coupling means (one or more connectors) configured to give way in a controlled manner under the traction generated by the torpedo.

The electronic command and control unit 35 also includes a launch interface module 56, operatively coupled, by a communication cable 58, to the torpedo tube 25 and, via the latter, to the torpedo. The launch interface module 56 is configured to set attack parameters of the torpedo (e.g. distance of torpedo explosion from target, detonation delay, etc.). The attack parameters can be altered as needed, depending on the type of target, environmental conditions, etc.

One or more among the guide wire module 42, the umbilical cable interface module 52 and the launch interface module 56 is also configured to receive a trigger command of the ballistic load (e.g. heavy torpedo) and, in consequence of this received command, control the activation of the ballistic load. This activation depends on the type of weapon and typically includes starting the propulsion system of the ballistic load 25.

The electronic command and control unit 35 also includes a wireless communication module (radio module) 60 and a cable communication module 62 (for example, an Ethernet card).

The radio module 60 and the cable communication module 62 are configured to communicate with a remote control station 64 (or with respective remote control stations). Communication between the radio module 60 and the remote control station 64 takes place via respective antennas 60a and 64a adapted to establish a radio link 66. The radio link 66 is of the encrypted type, using encryption techniques chosen as needed.

The remote control station 64 can send assorted information and/or commands to the electronic command and control unit 35. For example, the remote control station 64 sends the fire command to the radio module 60 that, after having received it, supplies it to the processing unit 36, which interprets it and controls one or more among the guide wire module 42, the umbilical cable interface module 52 and the launch interface module 56 by sending to it/them the activation/trigger command of the ballistic load 25 (e.g. the command to start the propulsion system of the ballistic load 25). In addition, in this context, the processing unit 36 also operates the possible cutting device of the umbilical cable 54, so that it cuts the umbilical cable 54, releasing the ballistic load 25 from the umbilical cable interface module 52.

Furthermore, the remote control station 64 can send attack parameters (e.g. the detonation delay) to the radio module 60 that, after having received them, supplies them to the processing unit 36, which, after having interpreted them, sends them to the launch interface module 56, so that the latter communicates them to the torpedo tube 25. Moreover, the remote control station 64 can send manoeuvring commands for the vehicle 1 and, in general, any other information for operation of the vehicle 1.

The remote control station 64 receives information on the state of the vehicle 1 and on the state of the torpedo/torpedo tube 25 from the radio module 60.

Communication between the cable communication module 62 and the remote control station 64 takes place via a physical link 65 (data transmission cable), for example, by exploiting Ethernet technology, or other available technologies, with a data transfer speed of a few hundred MB/sec. It is obvious that other types of link can be used, for example, links over optical fibre, which ensures higher transmission speeds.

The modules of the electronic command and control unit 35, including the processing unit 36, previously described and shown in Figure 6, can be implemented by means of cards, housed in a same container, or can form a distributed network architecture on board the vehicle 1. It is advisable that each module is watertight.

Independently of the embodiment, the modules that form the electronic command and control unit 35 and the processing unit 36 are operatively coupled to each other by means of a data bus 70, for example implemented on twisted-pair cables (preferably shielded). To this end, it is possible, for example, to use the CAN (controller area network) protocol, which contemplates the implementation of a serial digital communications bus of the broadcast type. This enables real-time distributed control with a very high level of security.

Independently of the type of data bus 70 used, it is advisable that the response times between the various connected modules/devices are minimal. It is also important to guarantee high noise immunity, guaranteeing operation of the data bus 70 even in extreme conditions, such as the interruption of one of the connection wires (if twisted pair) or the short circuit of one of them to earth or the power line. It is also important to guarantee high reliability, handling error detection and retransmission requests.

The presence of the radio module 60 and the cable communication module 62 guarantees redundancy in the case where one of the two links in interrupted and in the case where launching the torpedo must be authorized by more than one person (in this eventuality, launching is authorized only upon receiving the go-ahead via both links, via radio and via cable) . The data/commands received via the radio module 60 and the cable communication module 62 are sent over the data bus 70 to the processing unit 36, which interprets them and opportunely controls one or more among the guide wire module 42, the umbilical cable interface module 52 and the launch interface module 56, as previously described.

For example, if information for setting the attack parameters of the torpedo (e.g. distance of torpedo explosion from target, detonation delay, etc.) is received via the radio module 60, this information, opportunely encoded by the processing unit 36, is sent from the latter to the launch interface module 56, which in turn will send it, opportunely encoded, to the torpedo/torpedo tube 25.

In addition, the processing unit 36 is configured to control the traction system of the vehicle 1 by means of a traction and guidance command module (not shown in detail and, in itself, of known type). In this way, the vehicle 1 does not have a driving cabin, but can be remotely driven (acceleration, speed, steering, braking, etc.), for example by the remote control station 64 via the radio link 66 or the physical link 65. Alternatively, the vehicle 1 could be driven by an operator via a remote control that interfaces with the antenna 60a of the radio module 60. Since the vehicle 1 is a wheeled vehicle, it can be manoeuvred as needed and can cope with unforeseen situations (e.g. obstacles along the planned route). To this end, the vehicle 1 can also be equipped with a laser scanner that, once an obstacle is detected along the planned route (e.g. through triangulation), communicates the occurrence to a guidance control unit (not shown). The guidance control unit can react in several ways. For example, it could compute a new route in order to bypass the obstacle, or compute a different route, for example chosen from predetermined routes previously stored in a non-volatile onboard memory. After defining a new route, the guidance control unit automatically controls the traction system of the vehicle 1 in order to direct the vehicle 1 along the recalculated route. The guidance control unit can be housed in the same casing that houses the electronic command and control unit 35 and can be an integral part of the electronic command and control unit 35. Automatic guidance systems are known in the state of the art, and vehicles that adopt them are known as AGVs (Automatic Guided Vehicle). Numerous technologies exist that have been adopted for guiding an AGV system. In addition to laser triangulation, or as an alternative to it, several systems for automatic guidance use GPS.

As mentioned, the modules of the electronic command and control unit 35 can be implemented in the form of removable cards, so that the system as a whole is modular and new functions can be easily added (or existing functions removed, if necessary).

In particular, in this case, it is possible to implement the electronic command and control unit 35 by exploiting the control unit already present on tyred vehicles 1 of the previously identified type (in particular, EMT tyred vehicles). In fact, known types of tyred vehicles have an electronic control unit equipped with a similar processing unit to processing unit 36 (but without the functions described according to the present invention). The processing unit present in known types of tyred vehicles dialogues with numerous sensors on board the vehicle (temperature sensors, etc.), and handles the data received from them. It is therefore possible to industrialize the present invention using already existing vehicles, integrating the previously described functions through hardware and software updates, in particular by adding weaponry command and control cards configured to implement the previously described modules 42, 52 and 56.

The advantages provided by the invention are evident from the foregoing description.

In particular, the vehicle according to the present invention is suitable for transporting weapons on land in safety and operating them (activation, launching, etc.). Furthermore, since the battery pack 24 and the electronic command and control unit 35 are watertight, the vehicle is suitable for underwater use.

Moreover, it is possible to make variants with regard to the previously described invention.

For example, not all of the modules of the electronic command and control unit 35 may be present at the same time.

According to one embodiment, the electronic command and control unit 35 comprises at least the processing unit 36, the launch interface module 56, the umbilical cable interface module 52, and the communication modules 60 and 62.

Furthermore, one of the radio communication module 60 and cable communication module 62 can be replaced by an onboard communication module of the vehicle 1, including, for example, a keyboard and/or a push-button panel and/or a screen (e.g. a touch screen). In this way, specific commands (e.g. activation of the ballistic load, launching the torpedo, setting the attack parameters, etc.) can be issued directly by an operator near the vehicle 1, and not only from a distance.

Moreover, despite the previous description making explicit reference to a vehicle 1 for transporting and controlling a heavy torpedo, the latter can be replaced by another type of heavy ballistic load, for example a light gun, a countermeasure launcher, a ground-to-air or ground-to-ground launcher, etc. In these cases, the vehicle 1 (or parts thereof) do not need to be waterproof.

Furthermore, in the case of using a ballistic load different from the heavy wire-guided torpedo, it is obvious that the guide wire module 42 and the umbilical cable interface module 52 might not be present. The guide wire module 42 and/or the umbilical cable interface module 52 could be replaced by a generic trigger module for the ballistic load, configured to activate the ballistic load, or trigger the launching of the projectile. Moreover, in the absence of wire guidance, the (geo)localization parameters of the target are pre-set via the launch interface module 56.

## Claims

1. A vehicle (1) for supporting a ballistic load (25), comprising:
a frame (2) defining a loading board (3) adapted to carry the ballistic load (25);
a plurality of wheels (4);
a control system (35) for said ballistic load, including:
- a processing unit (36);
- a ballistic interface module (56), configured to communicate ballistic configuration parameters to said ballistic load and operatively coupled to the processing unit (36) by a data bus (70);
- a trigger module (42, 52, 56), configured to activate said ballistic load and operatively coupled to the processing unit (36) by the data bus (70); and
- a first communication module (60; 62) configured to receive an activation command of said ballistic load and said ballistic configuration parameters,
wherein the first communication module (60; 62) is configured to send said activation command of the ballistic load and said ballistic configuration parameters to the processing unit (36),
and wherein the processing unit (36) is configured to send said ballistic configuration parameters to the ballistic interface module (56) and the activation command of the ballistic load to the trigger module (52) via the data bus (70).
**characterized in that** the vehicle (1) further comprises hydraulic suspensions connected between the wheels (4) and the loading board (3) and adjustable elastic means (13, 19) for connecting the loading board (3) to said ballistic load (25),
said elastic means (13, 19) comprising a plurality of mutually-independent damping elastic devices (19), each elastic device (19) comprising at least one elastically deformable body and regulator means (20A, 20B, 21, 30),
the control system (35) being further configured to control said elastic means (13, 19) based on data received from the regulator means (20A, 20B, 21, 30), for varying the rigidity of said elastically deformable body.

2. The vehicle (1) according to claim 1, wherein said ballistic configuration parameters include the explosion distance from a target of the ballistic load and the detonation delay of the ballistic load.

3. The vehicle (1) according to claim 1 or 2, wherein activation of the ballistic load (25) by the trigger module (42, 52, 56) includes sending, by the trigger module to the ballistic load, a command to start the propulsion system of the ballistic load.

4. The vehicle (1) according to any of the preceding claims, wherein the control system (35) further comprises an umbilical cable interface module (52) operatively and mechanically coupled to the ballistic load by an umbilical cable (54) configured to transport system diagnostic information related to the ballistic load.

5. The vehicle (1) according to any of the preceding claims, wherein said ballistic load is a wire-guided torpedo, guided by a guide wire (44), the control system (35) further comprising a guide wire interface module (42) connected to said guide wire (44) and configured to drive said ballistic load towards a target by means of the guide wire (44).

6. The vehicle (1) according to claim 5, wherein said guide wire (44) is a fibre-optic cable including a first portion constrained to said ballistic load and wound so as to form a first winding, and a second portion constrained to said vehicle (1) and wound so as to form a second winding.

7. The vehicle (1) according to any of the preceding claims, wherein said first communication module (60, 62) is one among a radio interface module configured to communicate wirelessly in transmission and reception with a remote control station (64), and a physical interface module configured to communicate by wire in transmission and reception with a remote control station (64),
the control system (35) further comprising a second communication module (60, 62) that is the other among the radio interface module configured to communicate wirelessly in transmission and reception with a remote control station (64) and the physical interface module configured to communicate by wire in transmission and reception with a remote control station (64) .

8. The vehicle according to anyone of the preceding claims, further comprising hydraulic circuits for supplying the hydraulic suspensions (5), wherein said regulator means (20A, 20B, 21, 30) comprise an actuator (21) acting on said elastically deformable body and control means (22, 30) of said actuator; said control means being adapted to emit a control signal to said actuator in response to a pressure signal of at least one hydraulic circuit of at least one respective hydraulic suspension.

9. The vehicle according to anyone of the preceding claims, wherein each elastic device comprises two spiral springs (19) arranged in series with one another and with opposite winding, and at least one actuator (21) for at least one of said coil springs.

10. The vehicle according to anyone of the preceding claims, wherein said elastic means comprise a ring of said elastic devices coaxial with an axis orthogonal to said loading board.

11. The vehicle (1) according to anyone of the preceding claims, wherein said wheels (4) are rubber cushion wheels.

12. The vehicle (1) according to anyone of the preceding claims, wherein said control system (35) is housed in a watertight casing.

13. The vehicle (1) according to anyone of the preceding claims, wherein the vehicle is a wheeled electric vehicle.

14. The vehicle (1) according to anyone of the preceding claims, wherein the vehicle is an automated guided vehicle, AGV.

15. An assembly comprising:
- a vehicle (1) according to anyone of claims 1-14; and
- a ballistic load (25), carried by said vehicle (1) and chosen from the group comprising: a torpedo tube for a torpedo, a torpedo tube for a heavy-load wire-guided torpedo, a torpedo tube for a light-load torpedo, a heavy-load wire-guided torpedo, a light-load torpedo, a cannon, a countermeasure launcher, and a ground-to-air or air-to-air launcher.

## Patentansprüche

1. Fahrzeug (1) zum Stützen einer ballistischen Fracht (25), umfassend:
einen Rahmen (2), der eine Ladefläche (3) definiert, die zum Tragen der ballistischen Fracht (25) geeignet ist;
mehrere Räder (4);
ein Steuersystem (35) für die ballistische Fracht,
umfassend:
- eine Verarbeitungseinheit (36);
- ein ballistisches Schnittstellenmodul (56), das so konfiguriert ist, dass es ballistische Konfigurationsparameter an die ballistische Fracht übermittelt, und das über einen Datenbus (70) operativ mit der Verarbeitungseinheit (36) gekoppelt ist;
- ein Triggermodul (42, 52, 56), das so konfiguriert ist, dass es die ballistische Fracht aktiviert, und das über den Datenbus (70) operativ mit der Verarbeitungseinheit (36) gekoppelt ist; und
- ein erstes Kommunikationsmodul (60; 62), das so konfiguriert ist, dass es einen Aktivierungsbefehl der ballistischen Fracht und die ballistischen Konfigurationsparameter empfängt,
wobei das erste Kommunikationsmodul (60; 62) so konfiguriert ist, dass es den Aktivierungsbefehl der ballistischen Fracht und die ballistischen Konfigurationsparameter an die Verarbeitungseinheit (36) sendet,
und wobei die Verarbeitungseinheit (36) so konfiguriert ist, dass sie die ballistischen Konfigurationsparameter an das ballistische Schnittstellenmodul (56) und den Aktivierungsbefehl der ballistischen Fracht über den Datenbus (70) an das Triggermodul (52) sendet,
**dadurch gekennzeichnet, dass**
das Fahrzeug (1) ferner zwischen den Rädern (4) und der Ladefläche (3) verbundene hydraulische Aufhängungen und einstellbare elastische Mittel (13, 19) zum Verbinden der Ladefläche (3) mit der ballistischen Fracht (25) umfasst,
die elastischen Mittel (13, 19) mehrere voneinander unabhängige elastische Dämpfungsvorrichtungen (19) umfassen, wobei jede elastische Vorrichtung (19) mindestens einen elastisch verformbaren Körper und Reglereinrichtungen (20A, 20B, 21, 30) umfasst,
das Steuersystem (35) ferner so konfiguriert ist, dass es die elastischen Mittel (13, 19) basierend auf von den Reglereinrichtungen (20A, 20B, 21, 30) empfangenen Daten zum Verändern der Steifigkeit des elastisch verformbaren Körpers steuert.

2. Fahrzeug (1) nach Anspruch 1, wobei die ballistischen Konfigurationsparameter den Explosionsabstand von einem Ziel der ballistischen Fracht und die Detonationsverzögerung der ballistischen Fracht umfassen.

3. Fahrzeug (1) nach Anspruch 1 oder 2, wobei die Aktivierung der ballistischen Fracht (25) durch das Triggermodul (42, 52, 56) das Senden eines Befehls zum Starten des Antriebssystems der ballistischen Fracht durch das Triggermodul an die ballistische Fracht umfasst.

4. Fahrzeug (1) nach einem der vorangehenden Ansprüche, wobei das Steuersystem (35) ferner ein Versorgungskabel-Schnittstellenmodul (52) umfasst, das über ein Versorgungskabel (54), das so konfiguriert ist, dass es Systemdiagnoseinformationen in Bezug auf die ballistische Fracht transportiert, operativ und mechanisch mit der ballistischen Fracht gekoppelt ist.

5. Fahrzeug (1) nach einem der vorangehenden Ansprüche, wobei die ballistische Fracht ein drahtgesteuertes Torpedo ist, das durch einen Führungsdraht (44) geführt wird, wobei das Steuersystem (35) ferner ein Führungsdraht-Schnittstellenmodul (42) umfasst, das mit dem Führungsdraht (44) verbunden und so konfiguriert ist, dass es die ballistische Fracht mittels des Führungsdrahts (44) auf ein Ziel hin lenkt.

6. Fahrzeug (1) nach Anspruch 5, wobei der Führungsdraht (44) ein faseroptisches Kabel ist, das einen ersten Abschnitt umfasst, der an der ballistischen Fracht gehalten und so gewickelt ist, dass er eine erste Wicklung bildet, und einen zweiten Abschnitt umfasst, der an dem Fahrzeug (1) gehalten und so gewickelt ist, dass er eine zweite Wicklung bildet.

7. Fahrzeug (1) nach einem der vorangehenden Ansprüche, wobei das erste Kommunikationsmodul (60, 62) eines aus einem Funkschnittstellenmodul ist, das so konfiguriert ist, dass es bei der Übertragung und dem Empfang mit einer Fernsteuerstation (64) drahtlos kommuniziert, und einem physikalischen Schnittstellenmodul, das so konfiguriert ist, dass es bei der Übertragung und dem Empfang mit einer Fernsteuerstation (64) drahtgebunden kommuniziert,
wobei das Steuersystem (35) ferner ein zweites Kommunikationsmodul (60, 62) umfasst, welches das andere aus dem Funkschnittstellenmodul ist, das so konfiguriert ist, dass es bei der Übertragung und dem Empfang mit einer Fernsteuerstation (64) drahtlos kommuniziert, und dem physikalischen Schnittstellenmodul, das so konfiguriert ist, dass es bei der Übertragung und dem Empfang mit einer Fernsteuerstation (64) drahtgebunden kommuniziert.

8. Fahrzeug nach einem der vorangehenden Ansprüche, ferner umfassend Hydraulikkreisläufe zum Versorgen der hydraulischen Aufhängungen (5), wobei die Reglereinrichtungen (20A, 20B, 21, 30) einen Aktuator (21), der auf den elastisch verformbaren Körper wirkt, und Steuermittel (22, 30) des Aktuators umfassen;
wobei die Steuermittel geeignet sind, um als Reaktion auf ein Drucksignal von mindestens einem Hydraulikkreislauf mindestens einer jeweiligen hydraulischen Aufhängung ein Steuersignal an den Aktuator abzugeben.

9. Fahrzeug nach einem der vorangehenden Ansprüche, wobei jede elastische Vorrichtung zwei in Reihe zueinander und mit entgegengesetzter Wicklung angeordnete Spiralfedern (19) und mindestens einen Aktuator (21) für mindestens eine der Sprungfedern umfasst.

10. Fahrzeug nach einem der vorangehenden Ansprüche, wobei die elastischen Mittel einen Ring der elastischen Vorrichtungen koaxial mit einer zur Ladefläche senkrechten Achse umfassen.

11. Fahrzeug (1) nach einem der vorangehenden Ansprüche, wobei die Räder (4) Gummipufferräder sind.

12. Fahrzeug (1) nach einem der vorangehenden Ansprüche, wobei das Steuersystem (35) in einem wasserdichten Gehäuse untergebracht ist.

13. Fahrzeug (1) nach einem der vorangehenden Ansprüche, wobei das Fahrzeug ein Elektrofahrzeug auf Rädern ist.

14. Fahrzeug (1) nach einem der vorangehenden Ansprüche, wobei das Fahrzeug ein fahrerloses Transportfahrzeug (Automated Guided Vehicle, AGV) ist.

15. Baugruppe, umfassend:
- ein Fahrzeug (1) nach einem der Ansprüche 1-14; und
- eine ballistische Fracht (25), die von dem Fahrzeug (1) getragen und aus der Gruppe gewählt wird, umfassend: ein Torpedorohr für ein Torpedo, ein Torpedorohr für ein drahtgesteuertes Schwerlast-Torpedo, ein Torpedorohr für ein Leichtlast-Torpedo, ein drahtgesteuertes Schwerlast-Torpedo, ein Leichtlast-Torpedo, eine Kanone, eine Gegenschussanlage und eine Boden-Luft- oder Luft-Luft-Abschussvorrichtung.

## Revendications

1. Véhicule (1) pour supporter une charge balistique (25), comprenant :
un bâti (2) définissant une plateforme de chargement (3) adaptée pour transporter la charge balistique (25) ;
une pluralité de roues (4) ;
un système de commande (35) pour ladite charge balistique comprenant :
- une unité de traitement (36) ;
- un module d'interface balistique (56) configuré pour communiquer des paramètres de configuration balistique à ladite charge balistique et couplé de manière opérationnelle à l'unité de traitement (36) par un bus de données (70) ;
- un module de déclencheur (42, 52, 56) configuré pour activer ladite charge balistique et couplé de manière opérationnelle à l'unité de traitement (36) par le bus de données (70) ; et
- un premier module de communication (60 ; 62) configuré pour recevoir une commande d'activation de ladite charge balistique et lesdits paramètres de configuration balistique,
dans lequel le premier module de communication (60 ; 62) est configuré pour envoyer ladite commande d'activation à la charge balistique et lesdits paramètres de configuration balistique à l'unité de traitement (36),
et dans lequel l'unité de traitement (36) est configurée pour envoyer lesdits paramètres de configuration balistique au module d'interface balistique (56) et la commande d'activation de la charge balistique au module de déclencheur (52) via le bus de données (70),
**caractérisé en ce que** le véhicule (1) comprend en outre des suspensions hydrauliques raccordées entre les roues (4) et la plateforme de chargement (3) et des moyens élastiques ajustables (13, 19) pour raccorder la plateforme de chargement (3) à ladite charge balistique (25),
lesdits moyens élastiques (13, 19) comprenant une pluralité de dispositifs élastiques d'amortissement mutuellement indépendants (19), chaque dispositif élastique (19) comprenant au moins un corps élastiquement déformable et des moyens de régulateur (20A, 20B, 21, 30),
le système de commande (35) étant en outre configuré pour commander lesdits moyens élastiques (13, 19) sur la base des données reçues des moyens de régulateur (20A, 20B, 21, 30) pour modifier la rigidité dudit corps élastique déformable.

2. Véhicule (1) selon la revendication 1, dans lequel lesdits paramètres de configuration balistique comprennent une distance d'explosion par rapport à une cible de la charge balistique et le délai de détonation de la charge balistique.

3. Véhicule (1) selon la revendication 1 ou 2, dans lequel l'activation de la charge balistique (25) par le module de déclencheur (42, 52, 56) comprend l'envoi, par le module de déclencheur à la charge balistique, d'une commande pour mettre en marche le système de propulsion de la charge balistique.

4. Véhicule (1) selon l'une quelconque des revendications précédentes, dans lequel le système de commande (35) comprend en outre un module d'interface de câble ombilical (52) couplé de manière opérationnelle et mécanique à la charge balistique par un câble ombilical (54) configuré pour transporter l'information de diagnostic de système concernant la charge balistique.

5. Véhicule (1) selon l'une quelconque des revendications précédentes, dans lequel ladite charge balistique est une torpille guidée par fil, guidée par un fil-guide (44), le système de commande (35) comprenant en outre un module d'interface de fil-guide (42) raccordé audit fil-guide (44) et configuré pour entraîner ladite charge balistique vers une cible au moyen du fil-guide (44) .

6. Véhicule (1) selon la revendication 5, dans lequel le fil-guide (44) est un câble de fibre optique comprenant une première partie retenue sur ladite charge balistique et enroulée afin de former un premier enroulement, et une seconde partie retenue sur ledit véhicule (1) et enroulée afin de former un second enroulement.

7. Véhicule (1) selon l'une quelconque des revendications précédentes, dans lequel ledit premier module de communication (60, 62) est l'un parmi un module d'interface radio configuré pour communiquer sans fil en transmission et réception avec une station de commande à distance (64), et un module d'interface physique configuré pour communiquer par fil en transmission et réception avec une station de commande à distance (64),
le système de commande (35) comprenant en outre un second module de communication (60, 62) qui est l'autre parmi le module d'interface radio configuré pour communiquer sans fil en transmission et réception avec la station de commande à distance (64) et le module d'interface physique configuré pour communiquer par fil en transmission et réception avec une station de commande à distance (64).

8. Véhicule selon l'une quelconque des revendications précédentes, comprenant en outre des circuits hydrauliques pour alimenter les suspensions hydrauliques (5), dans lequel lesdits moyens de régulateur (20A, 20B, 21, 30) comprennent un actionneur (21) agissant sur ledit corps élastiquement déformable et les moyens de commande (22, 30) dudit actionneur ; lesdits moyens de commande étant adaptés pour émettre un signal de commande audit actionneur en réponse à un signal de pression d'au moins un circuit hydraulique d'au moins une suspension hydraulique respective.

9. Véhicule selon l'une quelconque des revendications précédentes, dans lequel chaque dispositif élastique comprend deux ressorts à spirale (19) agencés en série entre eux et avec un enroulement opposé, et au moins un actionneur (21) pour au moins l'un desdits ressorts hélicoïdaux.

10. Véhicule selon l'une quelconque des revendications précédentes, dans lequel lesdits moyens élastiques comprennent une bague desdits dispositifs élastiques coaxiale avec un axe orthogonal à ladite plateforme de chargement.

11. Véhicule (1) selon l'une quelconque des revendications précédentes, dans lequel lesdites roues (4) sont des roues d'amortissement en caoutchouc.

12. Véhicule (1) selon l'une quelconque des revendications précédentes, dans lequel ledit système de commande (35) est logé dans un boîtier étanche à l'eau.

13. Véhicule (1) selon l'une quelconque des revendications précédentes, où le véhicule est un véhicule électrique à roues.

14. Véhicule (1) selon l'une quelconque des revendications précédentes, où le véhicule est un véhicule à guidage automatique, AGV.

15. Ensemble comprenant :
un véhicule (1) selon l'une quelconque des revendications 1 à 14 ; et
une charge balistique (25), transportée par ledit véhicule (1) et choisie dans le groupe comprenant :
un tube de torpille pour une torpille, un tube de torpille pour une torpille lourde guidée par fil, un tube de torpille pour une torpille légère, une torpille lourde guidée par fil, une torpille légère, un canon, un lanceur de contre-mesure, et un lanceur sol-air ou air-air.
